# EUROPEAN PATENT SPECIFICATION

(11) **EP 4 579 292 B1**
(45) Date of publication and mention of the grant of the patent: **18.03.2026**
(21) Application number: 24223368.2
(22) Date of filing: 27.12.2024
(51) Int. Cl.: G02B 6/036, G02B 6/028

(54) **SINGLE MODE OPTICAL FIBER**
OPTISCHE EINMODENFASER
FIBRE OPTIQUE MONOMODE

(30) Priority: 27.12.2023 JP 2023220294
(43) Date of publication of application: 02.07.2025
(73) Proprietor: SHIN-ETSU CHEMICAL CO., LTD., Tokyo 1000005 (JP)
(72) Inventor: NODA, Naoto, Ibaraki, 3140102 (JP)
(74) Representative: Pfenning, Meinig & Partner mbB

(56) References cited:
- US-A1- 2013 136 408
- US-A1- 2018 031 761
- US-A1- 2021 405 286

## Description

### BACKGROUND

### 1. TECHNICAL FIELD

The present invention relates to a single mode optical fiber.

### 2. RELATED ART

Patent Document 1 describes that the "low bending loss SMF of the present invention have the following characteristics: a cutoff wavelength is 1260 nm or less; a zero dispersion wavelength is in a range of 1300 nm to 1324 nm; a zero dispersion slope is 0.093 ps/nm²/km or less; an MFD at a wavelength of 1310 nm is in a range of 5.5 µm to 7.9 µm; and a bending loss that is produced when the fiber is wound around a 10 mm radius for 10 turns is 0.5 dB or less at a wavelength of 1550 nm" (0027). Patent Document 2 describes that "an optical fiber of the present invention includes: (1) a core extending in an axial direction while containing an axial center of the fiber; a first optical cladding layer surrounding the core; a second optical cladding layer surrounding the first optical cladding layer; and a jacket layer surrounding the second optical cladding layer, (2) in which a relative refractive index difference Δ1 of the core with respect to the jacket layer is 0.31% to 0.37%, a relative refractive index difference Δ2 of the first optical cladding layer with respect to the jacket layer is +0.02% or larger, a relative refractive index difference Δ3 of the second optical cladding layer with respect to the jacket layer is -0.2% or smaller, and a relationship of Δ1 > Δ2 > Δ3 is satisfied" (0008). Patent Document 3 describes "an optical fiber comprising a first core, a second core, a third core, and a cladding, wherein the expressions of 0.30% ≤ Δ1 ≤ 0.45%, -0.05% ≤ Δ2 ≤ 0.05%, -0.6% ≤ Δ3 ≤ -0.3%, 2.85 ≤ b/a, 10 µm ≤ b ≤ 15 µm, and 3 µm ≤ c - b ≤ 5.5 µm are satisfied, and transmission loss for a wavelength of 1550 nm when the optical fiber is wound around a mandrel with a diameter of 10 mm is no greater than 0.2 dB/turn".

### Prior Art Documents

Relevant single mode optical fibers are also disclosed in prior art documents US 2013/136408 A1, US 2021/405286 A1 and US 2018/031761 A1.

### Patent document

Patent Document 1: Japanese Patent No. 4833071
Patent Document 2: Japanese Patent Application Publication No. 2012-212115
Patent Document 3: Japanese Patent Application Publication No. 2013-235261

### SUMMARY

In a first aspect of the present invention, provided is a single mode optical fiber including: a core layer; a first cladding layer adjacent to an outer circumference of the core layer; and a second cladding layer adjacent to an outer circumference of the first cladding layer. In the single mode optical fiber, when a refractive index of a center portion of the core layer is set as n₀, a radial position where a refractive index becomes n₀ × 0.45 is set as r_{CORE}, a radial position of r_{CORE} × 2.2 in the first cladding layer is set as r₂, a refractive index at the r₂ is set as n₂, a minimum value of a refractive index of the first cladding layer is set as n₃, a radial position where a refractive index becomes the n₃ is set as r₃, a radial position of a boundary between the first cladding layer and the second cladding layer is set as r₄, and an average refractive index of the second cladding layer is set as n₄, a relative refractive index difference Δn₀ of the core layer that is calculated from the n₀ and the n₄ is 0.3% or more and 0.5% or less, a relative refractive index difference Δn₂ that is calculated from the n₂ and the n₄ is -0.12% or more and -0.05 % or less, a relative refractive index difference Δn₃ that is calculated from the n₃ and the n₄ is -0.20% or more and -0.12% or less, and a relative refractive index difference of the first cladding layer is reduced continuously and gently from the r_{CORE} to the r₃.

In the single mode optical fiber, when a radial position of r_{CORE} × 0.8 in the core layer is set as r₁, for a differential value dΔ(r)/dr of a relative refractive index difference Δ(r) (%) with respect to a distance r (µm) from a center of the core layer, dΔ(r)/dr ≥ -0.08%/µm may be satisfied in a range in which a radial position r is 0 to r₁.

In the single mode optical fiber according to any of described above, the r_{CORE} may be 3 µm to 6 µm, and the r₄ may be 14 µm to 20 µm.

In the single mode optical fiber according to any of described above, a bending loss at a wavelength of 1550 nm at a time of being bent with a bending radius of 10 mm may be 0.10 dB/turn or less.

In the single mode optical fiber according to any of described above, a mode field diameter at a wavelength of 1310 nm may be 8.2 µm to 9.4 µm.

In the single mode optical fiber according to any of described above, a zero dispersion wavelength may be in a range of 1300 nm to 1324 nm, a dispersion slope at a zero dispersion wavelength may be 0.091 ps/nm²/km or less, and a chromatic dispersion value at a wavelength of 1550 nm may be 17.5 ps/nm/km or less.

In the single mode optical fiber according to any of described above, a cutoff wavelength measured at a fiber length of 22 m may be 1260 nm or less.

In the single mode optical fiber according to any of described above, germanium, fluorine, and chlorine may be added to the core layer and the first cladding layer, and chlorine may be added to the second cladding layer.

The summary clause does not necessarily describe all necessary features of the embodiments of the present invention. The present invention may also be a sub-combination of the features described above.

### BRIEF DESCRIPTION OF THE DRAWINGS

Fig. 1 shows an example of a refractive index profile structure of an optical fiber according to the present embodiment.
Fig. 2 shows a refractive index profile structure of an optical fiber in example 1.
Fig. 3 shows dΔ(r)/dr in example 1.
Fig. 4 shows a refractive index profile structure of an optical fiber in comparative example 1-1.
Fig. 5 shows dΔ(r)/dr in comparative example 1-1.
Fig. 6 shows a refractive index profile structure of an optical fiber in comparative example 1-2.
Fig. 7 shows dΔ(r)/dr in comparative example 1-2.

### DESCRIPTION OF EXEMPLARY EMBODIMENTS

The present invention will be described below through embodiments of the invention, but the following embodiments do not limit the invention according to the claims. In addition, not all of the combinations of features described in the embodiments are essential to the solution of the invention.

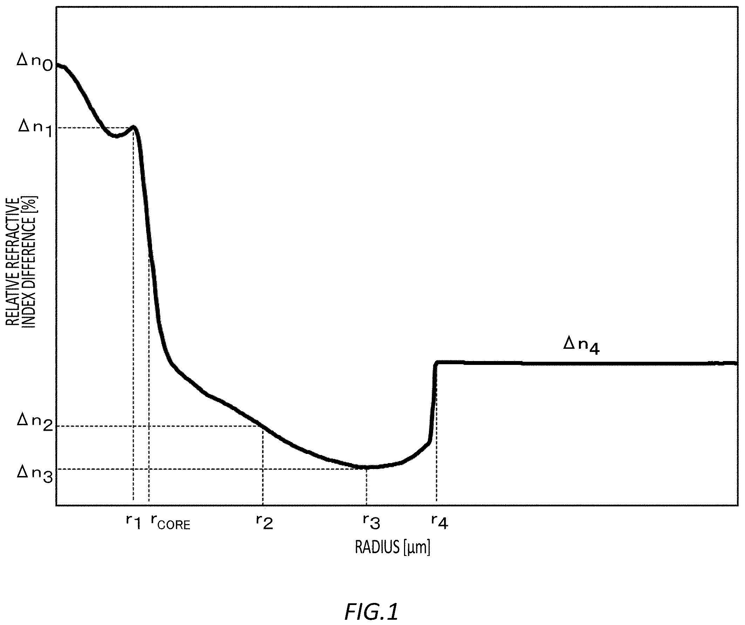

Fig. 1 shows an example of a refractive index profile structure of a single mode optical fiber according to the present embodiment. The single mode optical fiber according to the present embodiment achieves an optical fiber which has characteristics of a low bending loss and a low transmission loss, by adjusting refractive index profile shapes of a core region and an inner cladding region, and in which a dispersion slope at a zero dispersion wavelength, that is, a zero dispersion slope and a chromatic dispersion value, is reduced.

In the single mode optical fiber of the present embodiment; a radius r_{CORE} of a core layer is a radial position where a refractive index becomes n₀ × 0.45 with respect to a refractive index n₀ at a center portion of the core layer, that is, a core center portion (r = 0); a radial position of r_{CORE} × 0.8 in the core layer is set as r₁; a refractive index at the r₁ is set as n₁; a radial position of r_{CORE} × 2.2 in a first cladding layer is set as r₂; a refractive index at the r₂ is set as n₂; a minimum value of a refractive index of the first cladding layer is set as n₃; a radial position where a refractive index becomes the refractive index n₃ is set as r₃; a radial position of a boundary between the first cladding layer and a second cladding layer is set as r₄; and an average refractive index of the second cladding layer is set as n₄.

In addition, a relative refractive index difference of each layer is defined as follows. The relative refractive index difference Δ(r) at a distance r from the center of the core layer is set as Δ(r) = 100 × (n(r) - n₄)/n(r), with the refractive index n₄ of the second cladding layer being set as a reference. Accordingly, the relative refractive index difference Δn₀ of the core layer is calculated from a central refractive index n₀ of the core layer and the refractive index n₄ of the second cladding layer; the relative refractive index difference Δn₂ of the first cladding layer is calculated from the refractive index n₂ of the first cladding layer and the refractive index n₄ of the second cladding layer; and the relative refractive index difference Δn₃ of the first cladding layer is calculated from the refractive index n₃ of the first cladding layer and the refractive index n₄ of the second cladding layer.

It should be noted that the relative refractive index difference Δ(r) was calculated by preparing the single mode optical fiber with a diameter of 125 µm and measuring the refractive index at a pitch of 0.15 µm.

Here, chromatic dispersion will be briefly described.

The chromatic dispersion is a phenomenon in which light of respectively different wavelengths propagates at different speeds through the single mode optical fiber, and thus a difference in propagation time occurs. The chromatic dispersion is one of factors distorting a waveform of an optical signal, and limiting a transmission capacity. The chromatic dispersion has a wavelength dependency and is expressed as a sum of material dispersion and structural dispersion. The material dispersion is due to the wavelength dependency of the refractive index of a glass material used in the single mode optical fiber, and thus a control is difficult. On the other hand, the structural dispersion is due to the refractive index profile shape, it is important to appropriately control the refractive index profile shape. A wavelength (λ0) at which the chromatic dispersion becomes zero is the zero dispersion wavelength, and the zero dispersion slope defined in the standard of the ITU-T represents an inclination of the chromatic dispersion at the zero dispersion wavelength.

The single mode optical fiber of the present embodiment achieves reductions of the zero dispersion slope and the chromatic dispersion at a wavelength of 1550 nm (hereinafter referred to as 1550 nm chromatic dispersion), by adjusting the refractive index profile shapes of the core region and the inner cladding region. The zero dispersion slope and the 1550 nm chromatic dispersion typically have a negative correlation with the zero dispersion wavelength, and in decreasing both of the zero dispersion slope and the 1550 nm chromatic dispersion, it is effective to increase the zero dispersion wavelength.

Furthermore, in order to make sure which part of the refractive index profile shape is effective for the zero dispersion slope and the 1550 nm chromatic dispersion, an estimation value of an optical characteristic was calculated while a shape of a specific location of the refractive index profile shape was caused to change. In calculating the estimation value, a scalar wave equation was solved by a finite element method.

As a result of the estimation calculation, it was found that the relative refractive index difference Δn₂ at the radial position r₂ of r_{CORE} × 2.2 with respect to the core radius r_{CORE}, is one of the important factors. By increasing Δn₂, the zero dispersion wavelength was increased, and it was possible to reduce both of the zero dispersion slope and the 1550 nm chromatic dispersion. On the other hand, when Δn₂ is caused to be too great, the refractive index difference from that of the core layer becomes small, and it is not possible to obtain the bending loss that is specified in G. 657. A2 of the ITU-T. It is desirable that the relative refractive index difference Δn₂ in the first cladding layer is set to -0.12% to -0.05%.

It is desirable that the relative refractive index difference Δn₀ of the core layer is set to 0.30% to 0.50%. When the relative refractive index difference becomes less than 0.3%, the refractive index difference from that of the cladding layer becomes small, and it is not possible to obtain the bending loss that is specified in G. 657. A2 of the ITU-T. In addition, when the relative refractive index difference becomes 0.5% or more, a dopant concentration in a core portion becomes high, and regarding a transmission loss, there is a concern of deterioration by an increase of Rayleigh scattering.

It is desirable that the relative refractive index difference Δn₃ in the first cladding layer is set to -0.20% to -0.12%. When the relative refractive index difference becomes less than -0.20%, the negative dopant concentration in the cladding layer becomes high, and regarding a transmission loss, there is a concern of deterioration by an increase of Rayleigh scattering. In addition, when the relative refractive index difference becomes greater than -0.12%, the refractive index difference from that of the core layer becomes small, and it is not possible to obtain the bending loss that is specified in G. 657. A2 of the ITU-T.

It was found that a core shape is also one of the important factors for the zero dispersion slope and the 1550 nm chromatic dispersion. It was found that in the core shape in which the refractive index is sharply increased over the core center portion, the zero dispersion wavelength is increased, and it is possible to decrease the 1550 nm chromatic dispersion, but it leads to the increase of the zero dispersion slope. When the radial position of r_{CORE} × 0.8 in the core layer is set as r₁, for dΔ(r)/dr, it is desirable that dΔ(r)/dr ≥ -0.08%/µm is established in a range in which a distance from the center of the core layer, that is, the radial position r, is 0 to r₁.

It is desirable for the relative refractive index difference of the first cladding layer to be reduced continuously and gently from the radial position r_{CORE} to the r₃ to suppress an abrupt change in the refractive index, that is, an abrupt change in composition.

Here, a comparative example with the single mode optical fiber of the present embodiment will be described. The single mode optical fiber of the comparative example has a feature that the signal light propagates through the core portion of the optical fiber and the signal is able to be transmitted even in a state in which the optical fiber is bent to some degree. In the single mode optical fiber, as a bending radius thereof becomes small, a ratio of the light that cannot be propagated and leaks from the core is exponentially increased, which leads to an occurrence of an increase of the transmission loss. This is the bending loss. In recent years, the single mode optical fiber may be used in a bent state of a curvature radius of 15 mm or less to about 10 mm. On the other hand, there is a demand for the single mode optical fiber with a lower loss. As a standard in relation to the low bending loss of the single mode optical fiber, the standard that is defined by G.657 of the ITU-T is known. For example, the standard of the G.657.A2 specifies that the bending loss at a wavelength of 1550 nm in a case of being bent with a radius of 10 mm, is 0.10 dB/turn or less.

In order to reduce the bending loss, it is effective to increase the refractive index of the core, and confine the light in the core. This is improved by lowering a mode field diameter (MFD). For this reason, the single mode optical fibers with the MFD of approximately 8.2 µm to 8.8 µm are often used.

In addition, by adding a down dopant such as fluorine to the cladding layer of an outer circumference of the core layer, and adopting the refractive index profile of a trench type in which the refractive index is reduced, as well, it is possible to confine the light in the core and it is possible to reduce the bending loss of the single mode optical fiber.

In forming a trench layer, a manufacturing method in which the core and the inner cladding layer are formed, and then covered with a fluorine-doped glass tube, is known; however, this method increases the number of manufacturing steps for a base material, which is complicated. Furthermore, an impurity such as an OH group is easily mixed in near an interface of the trench layer, and in addition, there is also a composition difference (fluctuation of the interface) following an abrupt change in the refractive index at the interface, which can cause an increase in the transmission loss.

In setting the trench layer to be deep, it is necessary to increase an amount of fluorine addition. On the other hand, when the amount of fluorine addition is increased, the zero dispersion wavelength is decreased, and the zero dispersion slope and the chromatic dispersion value are reduced. In order for the single mode optical fiber to have the characteristics of a low bending loss and a low transmission loss, and in order for various types of optical characteristics of the single mode optical fiber to fall within a desired range, it is important to appropriately control the refractive index profile shapes of the core region and the inner cladding region.

In contrast with this, as described above, the single mode optical fiber of the present embodiment has the characteristics of a low bending loss and a low transmission loss, by adjusting the refractive index profile shapes of the core region and the inner cladding region, and the zero dispersion slope and the chromatic dispersion value are reduced.

In the single mode optical fiber of the present embodiment, the r_{CORE} may be 3 µm to 6 µm, and r₄ may be 14 µm to 20 µm. The bending loss at a wavelength of 1550 nm at a time of being bent with a bending radius of 10 mm may be 0.10 dB/turn or less. The mode field diameter at a wavelength of 1310 nm may be 8.2 µm to 9.4 µm.

In the single mode optical fiber of the present embodiment, the zero dispersion wavelength (λ0) may be in a range of 1300 nm to 1324 nm, the dispersion slope at the zero dispersion wavelength may be 0.091 ps/nm² /km or less, and the chromatic dispersion value at a wavelength of 1550 nm may be 17.5 ps/nm/km or less. A cutoff wavelength (λcc) measured at a fiber length of 22 m may be 1260 nm or less.

In the single mode optical fiber of the present embodiment, germanium, fluorine, and chlorine may be added to the core layer and the first cladding layer, and chlorine may be added to the second cladding layer.

Next, a method for manufacturing a single mode optical fiber according to the present invention will be described. First, a porous glass base material including the core layer and the first cladding layer is synthesized by a VAD method. At that time, a burner for forming the core layer and a burner for forming the first cladding layer are used. To the burner for forming the core layer, in addition to hydrogen, oxygen, and SiCl₄ as a raw material gas, GeCl₄ is supplied, and germanium is doped to increase the refractive index. To the burner for forming the first cladding layer, hydrogen, oxygen, and SiCl₄ as a raw material gas are supplied to deposit the first cladding layer, thereby producing a soot base material.

It should be noted that it is possible to control the core shape, by adjusting a flow rate of the gas that is supplied to the burner for forming the core layer, or burner settings, or the like.

Next, the produced soot base material is sintered in the following procedure. First, as a dehydrating process and a fluorine doping process for the soot base material, in a mixed gas atmosphere of the gas in a furnace Ar = 25 L/min, Cl₂ = 1.0 L/min, and SiF₄ = 0.25 L/min, heat treatment is performed on the entire length of the soot base material at a sintering temperature of 1200°C and a pull down speed of 10 mm/min. Next, as a transparent vitrification process, in a gas atmosphere of the gas in a furnace He = 20 L/min, the heat treatment is performed on the entire length of the soot base material at a sintering temperature of 1500°C and a pull down speed of 5 mm/min.

A transparent core base material produced in this way is set as a target, and an outside deposition is performed on the second cladding layer by an OVD method. A porous base material obtained in this way is sintered, and the transparent vitrification is performed, thereby obtaining the optical fiber base material. After that, by the optical fiber base material being heated to approximately 2100°C and being spun, it is possible to obtain the optical fiber with a diameter of 125 µm.

### [EXAMPLE]

### Example 1

First, the porous glass base material including the core and the first cladding layer was synthesized by the VAD method. The core was doped with germanium to increase the refractive index. For this porous glass base material, 1 liter of chlorine gas per minute, 0.25 liters of silane tetrafluoride gas per minute, and further 25 liters of Ar gas per minute, were supplied, and heating was performed to approximately 1200°C, and the porous glass base material was pulled down at 10 mm/min to perform dehydration and fluorine doping. Subsequently, 20 liters of He gas was supplied per minute, the heating was performed to about 1500°C, and the porous glass base material was pulled down at 5 mm/min to be set as the transparent glass core base material. It should be noted that instead of silane tetrafluoride gas, tetrafluoromethane, hexafluoroethane, or the like may be used.

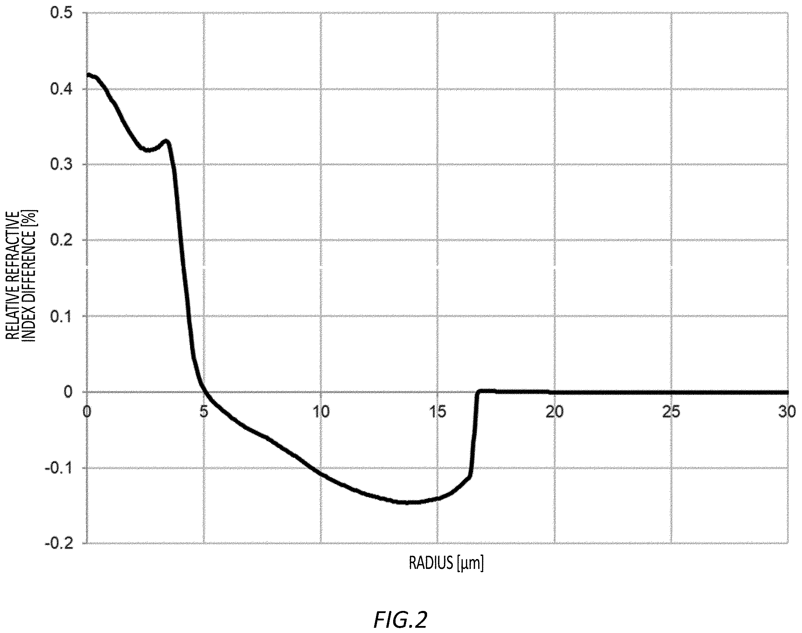

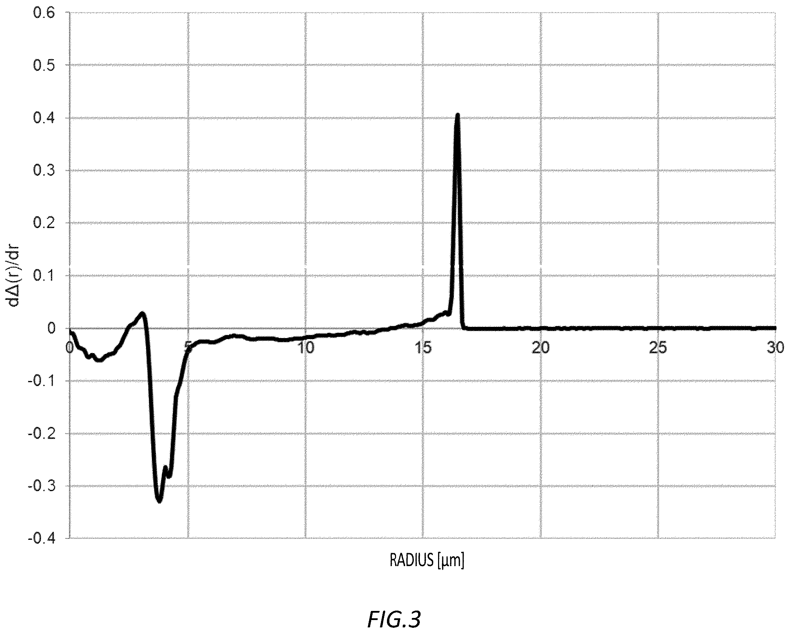

The transparent core base material that is produced in this way and includes the core and the first cladding layer was set as a target, and the outside deposition was performed on the second cladding layer by the OVD method. The porous base material obtained in this way was sintered, and the transparent vitrification was performed, thereby producing the optical fiber base material. The obtained optical fiber base material was heated to approximately 2100°C and was spun, thereby obtaining the optical fiber with a diameter of 125 µm. The refractive index profile of the obtained optical fiber is shown in Fig. 2, and dΔ(r)/dr is shown in Fig. 3.

### Comparative Example 1-1

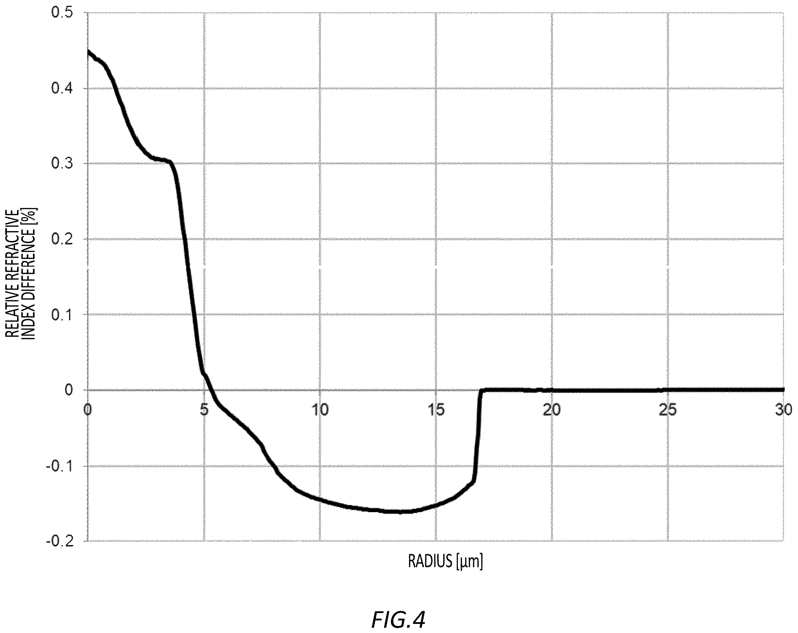

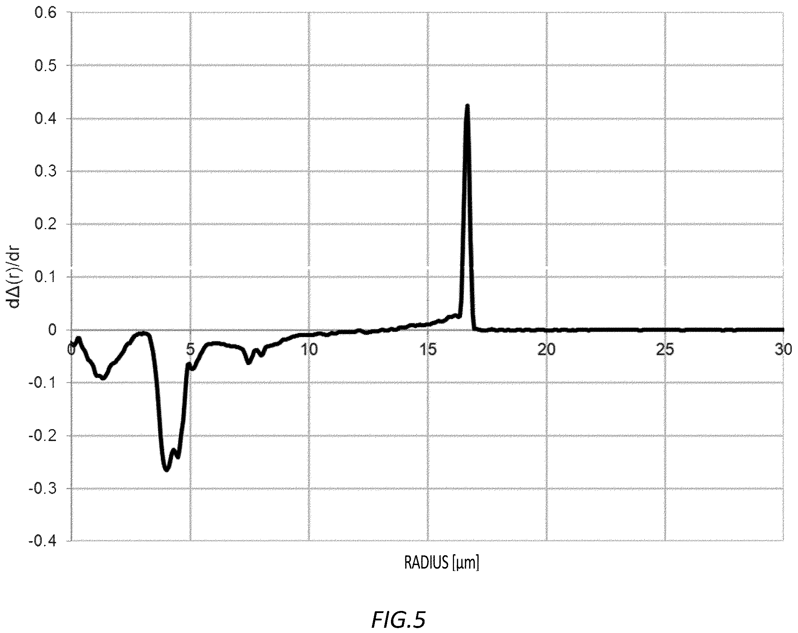

First, the porous glass base material including the core and the first cladding layer was synthesized by the VAD method. The core was doped with germanium to increase the refractive index. At this time, the flow rate of the gas that is supplied to the burner for forming the core layer, and the burner settings were changed, and an adjustment was performed to have the core shape as shown in Fig. 4. For this porous glass base material, 1 liter of chlorine gas per minute, 0.35 liters of silane tetrafluoride gas per minute, and further 25 liters of Ar gas per minute, were supplied, and the heating was performed to approximately 1230°C, and the porous glass base material was pulled down at 10 mm/min to perform dehydration and fluorine doping. Subsequently, 20 liters of He gas was supplied per minute, the heating was performed to about 1500°C, and the porous glass base material was pulled down at 5 mm/min to be set as the transparent glass core base material. After that, similar to example 1, the outside deposition and the transparent vitrification were performed on the second cladding layer, and the optical fiber base material was produced and spun to obtain the optical fiber. The refractive index profile of the obtained optical fiber is shown in Fig. 4, and dΔ(r)/dr is shown in Fig. 5.

### Comparative Example 1-2

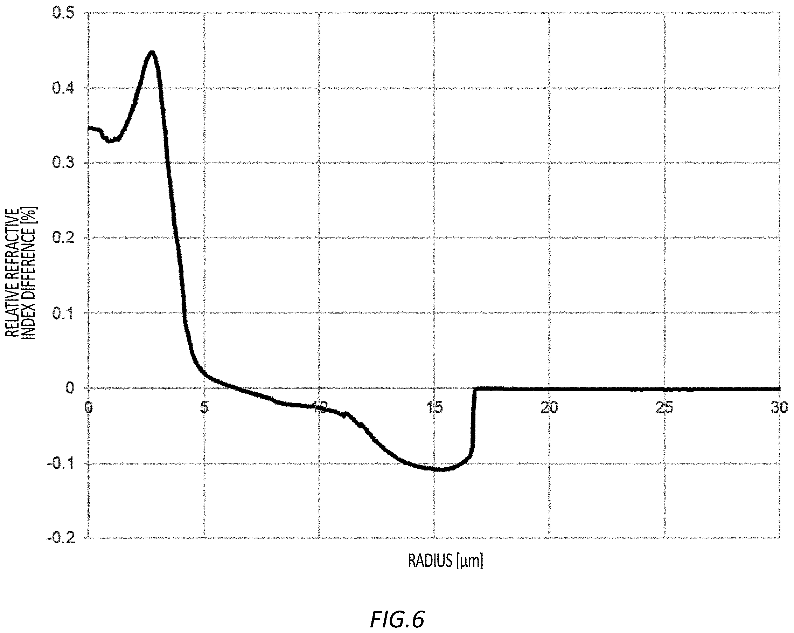

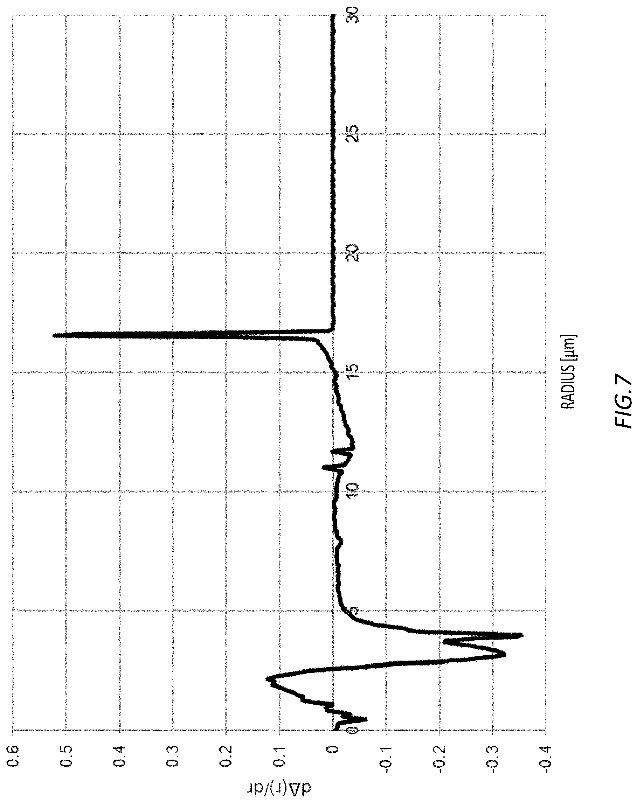

First, the porous glass base material including the core and the first cladding layer was synthesized by the VAD method. The core was doped with germanium to increase the refractive index. At this time, the flow rate of the gas that is supplied to the burner for forming the core layer, and the burner settings were changed, and an adjustment was performed to have the core shape as shown in Fig. 6. For this porous glass base material, 1 liter of chlorine gas per minute, 0.15 liters of silane tetrafluoride gas per minute, and further 25 liters of Ar gas per minute, were supplied, and the heating was performed to approximately 1180°C, and the porous glass base material was pulled down at 10 mm/min to perform dehydration and fluorine doping. Subsequently, 20 liters of He gas was supplied per minute, the heating was performed to about 1500°C, and the porous glass base material was pulled down at 5 mm/min to be set as the transparent glass core base material. After that, similar to example 1, the outside deposition and the transparent vitrification were performed on the second cladding layer, and the optical fiber base material was produced and spun to obtain the optical fiber. The refractive index profile of the obtained optical fiber is shown in Fig. 6, and dΔ(r)/dr is shown in Fig. 7.

Table 1 shows various types of parameters of the optical fiber obtained in the example and the comparative example.

**[Table 1]**

| | | UNIT | EXAMPLE 1 | COMPARATIVE EXAMPLE 1-1 | COMPARATIVE EXAMPLE 1-2 |
|---|---|---|---|---|---|
| r | CORE | *µ*m | 4.03 | 4.15 | 3.97 |
| | 1 | | 3.22 | 3.32 | 3.18 |
| | 2 | | 8.87 | 9.14 | 8.73 |
| | 3 | | 13.7 | 13.5 | 15.2 |
| | 4 | | 16.8 | 17.0 | 16.9 |
| Δn | 0 | % | 0.42 | 0.45 | 0.35 |
| | 1 | | 0.33 | 0.30 | 0.38 |
| | 2 | | -0.08 | -0.14 | -0.02 |
| | 3 | | -0.15 | -0.16 | -0.11 |
| MINIMUM VALUE OF dΔ(r)/dR | 0~r1 | %/ *µ*m | -0.06 | -0.09 | -0.06 |
| *λ* cc | | nm | 1214 | 1202 | 1224 |
| *λ* 0 | | nm | 1312 | 1310 | 1317 |
| ZERO DISPERSION SLOPE | | ps/nm²/km | 0.089 | 0.093 | 0.087 |
| WAVELENGTH DISPERSION | 1550n m | ps/nm/km | 17.3 | 17.9 | 17.1 |
| MFD | 1310nm | µ m | 8.55 | 8.56 | 8.58 |
| TRANSMISSION LOSS | 1310nm | d B/km | 0.327 | 0.334 | 0.329 |
| | 1383nm | | 0.282 | 0.280 | 0.285 |
| | 1550n m | | 0.183 | 0.182 | 0.185 |
| BENDING LOSS | R10 × 1turn | dB | 0.04 | 0.02 | 0.12 |

In example 1, the transmission loss at a wavelength of 1310 nm is 0.327 dB/km, and the bending loss at a wavelength of 1550 nm at a time of being bent with a bending radius of 10 mm is 0.04 dB/turn, which satisfies the bending loss value specified in G. 657. A2 of the ITU-T. In addition, the zero dispersion slope is 0.089 ps/nm²/km, and the chromatic dispersion at a wavelength of 1550 nm is 17.3 ps/nm/km, and for both, favorable values are obtained.

In comparative example 1-1, in comparison with example 1, by fluorine doping progressing to an inside of the first cladding layer, and by Δn₂ or Δn₃ being small, the bending loss becomes small, the transmission loss at a wavelength of 1310 nm is 0.334 dB/km, and a bending loss at a wavelength of 1550 nm at a time of being bent with a bending radius of 10 mm is 0.02 dB/turn, which satisfies the bending loss value specified in G.657.A2 of the ITU-T; however, on the other hand, by the Δn₂ becoming small, the zero dispersion slope is 0.093 ps/nm²/km, which is outside the standard of the ITU-T. In addition, the chromatic dispersion at a wavelength of 1550 nm became 17.9 ps/nm/km, which is great.

In addition, the core shape had a steep refractive index from r₁ to the center, and the minimum value of dΔ(r)/dr was -0.09%/µm in a range of r from 0 to r₁. Furthermore, by the effect of the amount of fluorine addition being increased, the transmission loss at a wavelength of 1310 nm also became greater in comparison to example 1.

In comparative example 1-2, the transmission loss at a wavelength of 1310 nm was 0.329 dB/km, and the bending loss at a wavelength of 1550 nm at a time of being bent with a bending radius of 10 mm was 0.12 dB/turn, which was outside the standard of G. 657. A2 of the ITU-T. The zero dispersion slope was 0.087 ps/nm²/km, and the chromatic dispersion at a wavelength of 1550 nm was 17.1 ps/nm/km.

In comparative example 1-2, in comparison with example 1, by fluorine doping not progressing to the inside of the first cladding layer, and by Δn₂ or Δn₃ becoming great, the bending loss becomes great.

While the present invention has been described by way of the embodiments, the technical scope of the present invention is not limited to the scope described in the above-described embodiments. It is apparent to persons skilled in the art that various alterations or improvements can be made to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described by using phrases such as "first" or "next" for the sake of convenience in the claims, specification, and drawings, it does not necessarily mean that the process must be performed in this order.

## Claims

1. A single mode optical fiber comprising: a core layer; a first cladding layer adjacent to an outer circumference of the core layer; and a second cladding layer adjacent to an outer circumference of the first cladding layer, wherein
when a refractive index of a center portion of the core layer is set as n₀, a radial position where a refractive index becomes n₀ × 0.45 is set as r_{CORE}, a radial position of r_{CORE} × 2.2 in the first cladding layer is set as r₂, a refractive index at the r₂ is set as n₂, a minimum value of a refractive index of the first cladding layer is set as n₃, a radial position where a refractive index becomes the n₃ is set as r₃, a radial position of a boundary between the first cladding layer and the second cladding layer is set as r₄, and an average refractive index of the second cladding layer is set as n₄, a relative refractive index difference Δn₀ of the core layer that is calculated from the n₀ and the n₄ is 0.3% or more and 0.5% or less, a relative refractive index difference Δn₃ that is calculated from the n₃ and the n₄ is -0.20% or more and -0.12% or less, and a relative refractive index difference of the first cladding layer is reduced continuously and gently from the r_{CORE} to the r₃,
**characterized in that**
a relative refractive index difference Δn₂ that is calculated from the n₂ and the n₄ is -0.12% or more and -0.05 % or less.

2. The single mode optical fiber according to claim 1, wherein when a radial position of r_{CORE} × 0.8 in the core layer is set as r₁, for a differential value dΔ(r)/dr of a relative refractive index difference Δ(r) (%) with respect to a distance r (µm) from a center of the core layer, dΔ(r)/dr ≥ -0.08%/µm is satisfied in a range in which a radial position r is 0 to r₁.

3. The single mode optical fiber according to claim 1 or 2, wherein the r_{CORE} is 3 µm to 6 µm, and the r₄ is 14 µm to 20 µm.

4. The single mode optical fiber according to any one of claims 1 to 3, wherein a bending loss at a wavelength of 1550 nm at a time of being bent with a bending radius of 10 mm is 0.10 dB/turn or less.

5. The single mode optical fiber according to any one of claims 1 to 4, wherein a mode field diameter at a wavelength of 1310 nm is 8.2 µm to 9.4 µm.

6. The single mode optical fiber according to any one of claims 1 to 5, wherein a zero dispersion wavelength is in a range of 1300 nm to 1324 nm, a dispersion slope at a zero dispersion wavelength is 0.091 ps/nm²/km or less, and a chromatic dispersion value at a wavelength of 1550 nm is 17.5 ps/nm/km or less.

7. The single mode optical fiber according to any one of claims 1 to 6, wherein a cutoff wavelength measured at a fiber length of 22 m is 1260 nm or less.

8. The single mode optical fiber according to any one of claims 1 to 7, wherein germanium, fluorine, and chlorine are added to the core layer and the first cladding layer, and chlorine is added to the second cladding layer.

## Patentansprüche

1. Optische Monomoden-Faser, umfassend: eine Kernschicht; eine erste Mantelschicht, die an einen Außenumfang der Kernschicht angrenzt; und eine zweite Mantelschicht, die an einen Außenumfang der ersten Mantelschicht angrenzt, wobei
wenn ein Brechungsindex eines mittleren Abschnitts der Kernschicht als n₀ festgelegt ist, eine radiale Position, an der ein Brechungsindex n₀ x 0,45 ist, als r_{CORE} festgelegt ist, eine radiale Position von r_{CORE} x 2,2 in der ersten Mantelschicht als r₂ festgelegt ist, ein Brechungsindex bei r₂ als n₂ festgelegt ist, ein Mindestwert eines Brechungsindex der ersten Mantelschicht als n₃ festgelegt ist, eine radiale Position, an der ein Brechungsindex zu n₃ wird, als r₃ festgelegt ist, eine radiale Position einer Grenze zwischen der ersten Mantelschicht und der zweiten Mantelschicht als r₄ festgelegt ist, und ein durchschnittlicher Brechungsindex der zweiten Mantelschicht als n₄ festgelegt ist, eine relative Brechungsindexdifferenz Δn₀ der Kernschicht, die aus dem n₀ und dem n₄ berechnet ist, 0.3 % oder mehr und 0,5 % oder weniger beträgt, eine relative Brechungsindexdifferenz Δn₃, der aus n₃ und n₄ berechnet ist, -0,20 % oder mehr und -0,12 % oder weniger beträgt, und eine relative Brechungsindexdifferenz der ersten Mantelschicht kontinuierlich und sanft vom r_{CORE} zum r₃ verringert ist,
**dadurch gekennzeichnet, dass**
eine relative Brechungsindexdifferenz Δn₂, die aus n₂ und n₄ berechnet ist, -0,12 % oder mehr und -0,05 % oder weniger beträgt.

2. Optische Monomoden-Faser nach Anspruch 1, wobei, wenn eine radiale Position von r_{CORE} x 0,8 in der Kernschicht als r₁ festgelegt ist, für einen Differentialwert dΔ(r)/dr einer relativen Brechungsindexdifferenz Δ(r) (%) in Bezug auf einen Abstand r(µm) von einem Zentrum der Kernschicht dΔ(r)/dr ≥ -0,08%/µm in einem Bereich erfüllt ist, in dem eine radiale Position r 0 bis r₁ ist.

3. Optische Monomoden-Faser nach Anspruch 1 oder 2, wobei r_{CORE} 3 µm bis 6 µm und r₄ 14 µm bis 20 µm beträgt.

4. Optische Monomoden-Faser nach einem der Ansprüche 1 bis 3, wobei der Biegeverlust bei einer Wellenlänge von 1550 nm zum Zeitpunkt des Biegens mit einem Biegeradius von 10 mm 0,10 dB/Wendung oder weniger beträgt.

5. Optische Monomoden-Faser nach einem der Ansprüche 1 bis 4, wobei der Modenfelddurchmesser bei einer Wellenlänge von 1310 nm 8,2 µm bis 9,4 µm beträgt.

6. Optische Monomoden-Faser nach einem der Ansprüche 1 bis 5, wobei die Wellenlänge der Nulldispersion in einem Bereich von 1300 nm bis 1324 nm liegt, die Dispersionssteigung bei einer Nulldispersionswellenlänge 0,091 ps/nm²/km oder weniger beträgt und der Wert der chromatischen Dispersion bei einer Wellenlänge von 1550 nm 17,5 ps/nm/km oder weniger beträgt.

7. Optische Monomoden-Faser nach einem der Ansprüche 1 bis 6, wobei die Grenzwellenlänge, gemessen bei einer Faserlänge von 22 m, 1260 nm oder weniger beträgt.

8. Optische Monomoden-Faser nach einem der Ansprüche 1 bis 7, wobei Germanium, Fluor und Chlor der Kernschicht und der ersten Mantelschicht und Chlor der zweiten Mantelschicht zugesetzt sind.

## Revendications

1. Fibre optique monomode comprenant : une couche d'âme ; une première couche de gainage adjacente à une circonférence externe de la couche d'âme ; et une seconde couche de gainage adjacente à une circonférence externe de la première couche de gainage, dans laquelle :
lorsqu'un indice de réfraction d'une partie centrale de la couche d'âme est défini en tant que n₀, qu'une position radiale au niveau de laquelle un indice de réfraction devient égal à n₀ x 0,45 est définie en tant que r_{CORE}, qu'une position radiale de r_{CORE} x 2,2 dans la première couche de gainage est définie en tant que r₂, qu'un indice de réfraction au niveau de la r₂ est défini en tant que n₂, qu'une valeur minimum d'un indice de réfraction de la première couche de gainage est définie en tant que n₃, qu'une position radiale au niveau de laquelle un indice de réfraction devient égal à la n₃ est définie en tant que r₃, qu'une position radiale d'une frontière entre la première couche de gainage et la seconde couche de gainage est définie en tant que r₄ et qu'un indice de réfraction moyen de la seconde couche de gainage est défini en tant que n₄, une différence d'indice de réfraction relative Δn₀ de la couche d'âme qui est calculée à partir du n₀ et du n₄ est de 0,3 % ou plus et de 0,5 % ou moins, une différence d'indice de réfraction relative Δn₃ qui est calculée à partir de la n₃ et du n₄ est de -0,20 % ou plus et de -0,12 % ou moins et une différence d'indice de réfraction relative de la première couche de gainage est réduite en continu et de façon progressive depuis la r_{CORE} jusqu'à la r₃,
**caractérisée en ce que** :
une différence d'indice de réfraction relative Δn₂ qui est calculée à partir du n₂ et du n₄ est de -0,12 % ou plus et de -0,05 % ou moins.

2. Fibre optique monomode selon la revendication 1, dans laquelle, lorsqu'une position radiale de r_{CORE} x 0,8 dans la couche d'âme est définie en tant que r₁, pour une valeur différentielle dΔ(r)/dr d'une différence d'indice de réfraction relative Δ(r) (%) en fonction d'une distance r (µm) par rapport à un centre de la couche d'âme, Δ(r)/dr ≥ - 0,08 %/µm est satisfait dans une plage dans laquelle une position radiale r va de 0 à r₁.

3. Fibre optique monomode selon la revendication 1 ou 2, dans laquelle la r_{CORE} va de 3 µm à 6 µm et la r₄ va de 14 µm à 20 µm.

4. Fibre optique monomode selon l'une quelconque des revendications 1 à 3, dans laquelle une perte de courbure à une longueur d'onde de 1 550 nm à l'instant de la courbure selon un rayon de courbure de 10 mm est de 0,10 dB/tour ou moins.

5. Fibre optique monomode selon l'une quelconque des revendications 1 à 4, dans laquelle un diamètre de champ de mode à une longueur d'onde de 1 310 nm va de 8,2 µm à 9,4 µm.

6. Fibre optique monomode selon l'une quelconque des revendications 1 à 5, dans laquelle une longueur d'onde de dispersion zéro est dans une plage de 1 300 nm à 1 324 nm, une pente de dispersion à une longueur d'onde de dispersion zéro est de 0,091 ps/nm²/km et une valeur de dispersion chromatique à une longueur d'onde de 1 550 nm est de 17,5 ps/nm/km ou moins.

7. Fibre optique monomode selon l'une quelconque des revendications 1 à 6, dans laquelle une longueur d'onde de coupure mesurée à une longueur de fibre de 22 m est de 1 260 nm ou moins.

8. Fibre optique monomode selon l'une quelconque des revendications 1 à 7, dans laquelle du germanium, du fluor et du chlore sont ajoutés à la couche d'âme et à la première couche de gainage et du chlore est ajouté à la seconde couche de gainage.
